## Europäisches Patentamt
## European Patent Office
## Office européen des brevets

(19)

(11) Numéro de publication: **0 141 688**
**B1**

(12)

# FASCICULE DE BREVET EUROPÉEN

(45) Date de publication du fascicule du brevet:
**10.05.89**

(21) Numéro de dépôt: **84401686.5**

(22) Date de dépôt: **17.08.84**

(51) Int. Cl.⁴: **H 05 B 3/48,** G 21 C 17/00

(54) Canne chauffante sans perte à la terre.

(30) Priorité: **25.08.83 FR 8313728**

(43) Date de publication de la demande:
**15.05.85 Bulletin 85/20**

(45) Mention de la délivrance du brevet:
**10.05.89 Bulletin 89/19**

(84) Etats contractants désignés:
**BE DE GB IT SE**

(56) Documents cité:
**BE-A-648 725**
**DE-B-1 151 327**
**FR-A-2 464 007**
**GB-A-1 128 819**
**US-A-3 113 244**
**US-A-3 340 382**
**US-A-4 326 122**

(73) Titulaire: **COMMISSARIAT A L'ENERGIE ATOMIQUE, 31/33, rue de la Fédération, F-75015 Paris (FR)**

(72) Inventeur: **Curtila, Robert, 624, Route de Narbonne, F-38950 Saint- Martin- Le- Vinoux (FR)**

(74) Mandataire: **Mongrédien, André, c/o BREVATOME 25, rue de Ponthieu, F-75008 Paris (FR)**

EP 0 141 688 B1

## Description

La présente invention est relative à une canne chauffante perfectionnée, telle qu'on les utilise notamment pour simuler des aiguilles combustibles d'un réacteur nucléaire ou d'une façon générale un corps de forme allongée, en forme d'aiguille, et dégageant des calories.

On connaît déjà par le document DE-A-1 151 327 des aiguilles chauffantes généralement constituées au moyen d'un ou plusieurs fils électriques isolés entre eux par de la magnésie, de l'alumine ou du nitrure de bore et entourées d'une gaine extérieure. On a également réalisé des aiguilles ou cannes chauffantes comportant une pluralité de fils électriques parallèles solidarisés par deux pièces d'extrémités métalliques et entourées par une gaine tubulaire également métallique qui maintient le matériau isolant électrique sous forme de poudre compactée autour des fils électriques résistants et chauffants à proprement parler. De telles aiguilles chauffantes ont fait l'objet notamment du brevet français n° 1 543 327 déposé le 25 août 1967 pour "Aiguille chauffante" au nom du COMMISSARIAT A L'ENERGIE ATOMIQUE.

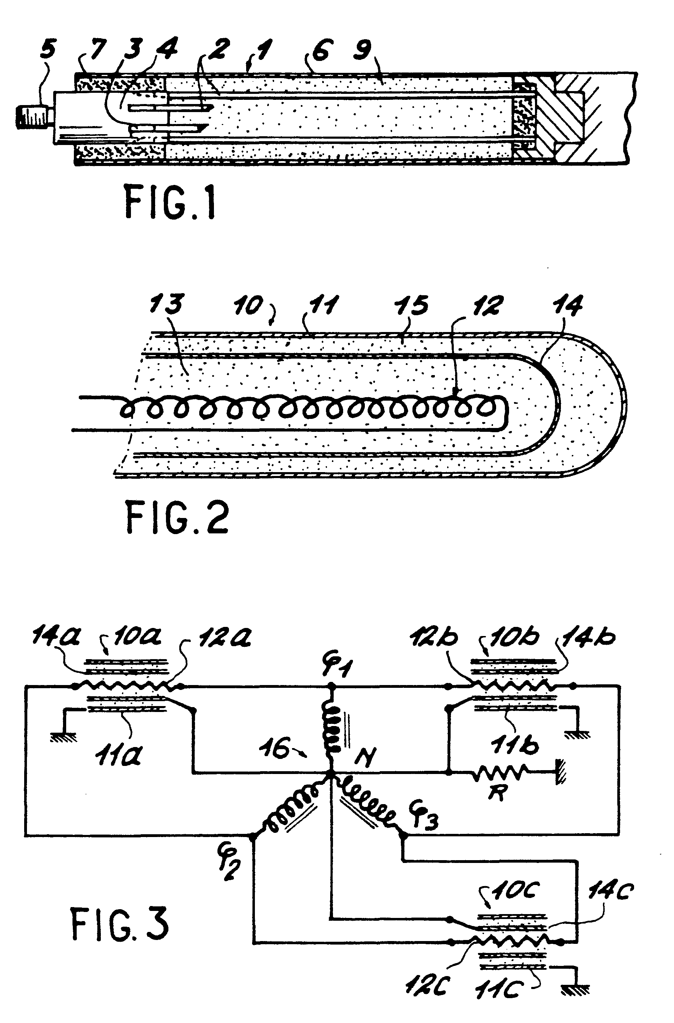

Une telle aiguille connue est représentée sur la fig. 1 et se compose d'un ensemble de fils électriques résistants tels que 2 réalisés en un alliage de tungstène et de rhénium et préalablement façonnés et coupés à la longueur désirée. Ces fils, au nombre de neuf dans l'exemple de réalisation considéré, sont disposés parallèlement les uns aux autres et à cet effet engagés dans des gorges 3 prévues à l'extrémité d'une pièce cylindrique 4 en molybdène terminée par un embout fileté 5 permettant de raccorder l'aiguille à un des pôles d'une source de tension électrique appropriée. Les extrémités des fils 2 une fois engagées dans leurs gorges 3 sont serties à la presse sur la pièce 4 et introduites à l'intérieur d'une gaine tubulaire extérieure 6 en tantale. On introduit à l'intérieur de la gaine et autour des fils électriques 2 qu'elle contient, un matériau isolant électrique approprié 9 et plus particulièrement du nitrure de bore en poudre ou en préformes que l'on compacte soit au fur et à mesure de son introduction, soit en fin de fabrication.

En fonctionnement, l'aiguille chauffante ainsi réalisée est connectée par son embout fileté 5 à une source de courant (non représentée), la sortie du courant s'effectuant par l'autre extrémité de la gaine ou par un conducteur séparé. Une telle aiguille, utilisée pour simuler le fonctionnement d'une aiguille combustible dans un réacteur à refroidissement par sodium liquide, plonge dans le bain liquide par lequel peut éventuellement s'effectuer le retour du courant.

Toutefois, des cannes chauffantes construites selon le modèle précédent présentent l'inconvénient de permettre, du fait de leur gaine métallique externe 6, des pertes électriques à la terre qui, lorsqu'on les emploie dans des circuits de distribution électriques classiques, nuisent à la protection des réseaux et du personnel.

La présente invention a précisément pour objet une canne chauffante sans perte à la terre qui permet, à l'aide de moyens très simples, de réaliser la protection électrique de l'élément chauffant interne vis-à-vis de l'extérieur.

Cette canne chauffante sans perte à la terre qui comportent, dans une enveloppe métallique, un milieu isolant, dans lequel sont noyés des éléments électriquement résistants parcourus par un courant électrique, un écran métallique intermédiaire à potentiel constant ou nul entre les éléments résistants et l'enveloppe métallique, se caractérise en ce que les éléments résistants étant alimentés par un réseau électrique triphasé, l'écran métallique intermédiaire est relié au conducteur neutre (N) du réseau triphasé.

La présence d'un écran métallique intermédiaire, à potentiel constant ou nul, entre les éléments résistants chauffants et l'enveloppe métallique, permet d'obtenir une séparation électrique complète entre les conducteurs chauffants parcourus par le courant électrique et la gaine externe métallique en relation avec l'extérieur.

A condition toutefois de réaliser le branchement de l'écran métallique intermédiaire de façon bien précise, on parvient ainsi à annuler complètement le courant de fuite à la terre.

Dans un premier mode de mise en oeuvre de l'invention, les éléments résistants de la canne chauffante étant alimentés par un réseau électrique triphasé, l'écran métallique intermédiaire est relié au conducteur neutre du réseau triphasé.

Dans un deuxième mode de mise en oeuvre de la canne chauffante, objet de l'invention, l'écran métallique intermédiaire est relié en un point précis du réseau électrique d'alimentation, indépendant de la terre, et où peuvent être collectés les courants de perte.

Selon l'invention, l'écran métallique intermédiaire peut être de toute nature quelconque connue, notamment tube métallique continu ou tube en forme de treillis, dès lors qu'il se situe à l'intérieur de l'isolant entre le fil chauffant et la gaine extérieure conductrice. Du fait que cet écran métallique est porté à un potentiel constant (neutre au point précis d'un réseau indépendant de la terre) la gaine extérieure ne peut voir aucune fuite de courant électrique. Elle peut donc de ce fait être raccordée à toute structure métallique telle qu'une cuve ou tout autre environnement conducteur, sans qu'il y ait pour autant création de courants de circulation qui peuvent perturber les réseaux, provoquer des fuites électriques et des points de corrosion ou des risques pour le personnel.

Les cannes chauffantes selon l'invention trouvent un grand nombre d'application, notamment dans l'énergie nucléaire, où l'on peut les utiliser dans les pressuriseurs de réacteur du type à eau pressurisée ainsi que dans la marine, sur du matériel embarqué à bord des bateaux. On peut également utiliser l'invention dans l'industrie chimique ou pétrolière où sont exigés des matériels anti-déflagrant. De manière générale, l'invention est utilisable dans toutes applications où les pertes électriques à la terre sont indésirables de même que toutes perturbations d'origine électrique, électromagnétique ou électrostatique.

De toute façon, l'invention sera mieux comprise en se référant à la description qui suit d'un exemple de canne chauffante sans perte à la terre, description qui sera faite à titre surtout illustratif et non limitatif en se référant aux figures 2 et 3 ci-jointes, sur lesquelles:

- la fig. 2 est une coupe schématique à travers une canne chauffante, objet de l'invention;
- la fig. 3 représente le montage, dans un branchement sur un réseau triphasé, d'un simulateur thermique utilisant trois cannes chauffantes conformes à l'invention.

Sur la figure 2, on voit l'extrémité d'une canne chauffante 10 comportant une enveloppe externe 11 constituée d'un blindage métallique conducteur et l'élément chauffant 12 parcouru par un courant électrique assurant un dégagement de calories par effet Joule. Cet élément chauffant 12 baigne dans un milieu isolant électrique 13 et conformément à l'invention, un écran métallique intermédiaire 14 sépare électriquement parlant l'intérieur de la canne en deux zones indépendantes. L'espace compris entre l'écran 14 et l'enveloppe ou blindage externe 11 est également rempli d'un isolant électrique 15. Du fait de l'effet électrique de l'écran 14, la gaine externe ou blindage 11 ne voit aucune fuite électrique en provenance de l'élément chauffant 12, dès lors que l'écran 14 est porté à un potentiel constant ou nul.

Sur la fig. 3, on a représenté schématiquement le branchement possible d'un simulateur thermique comportant trois cannes isolantes 10a, 10b et 10c, munies chacune de leur écran électrique 14a, 14b et 14c, ainsi que de leurs éléments chauffants 12a, 12b et 12c.

L'alimentation électrique des trois cannes 10a, 10b et 10c, de leurs éléments chauffants 12a, 12b et 12c est réalisée à l'aide d'un réseau triphasé monté en étoile, chacun des éléments chauffants 12 étant alimenté entre deux des phases consécutives Φ1, Φ2, Φ3 du système triphasé 16.

Conformément à l'invention, les écrans 14a, 14b et 14c sont reliés au point neutre N du réseau triphasé 16, ce qui assure ainsi l'effet électrique de protection recherché. Enfin, les blindages ou armatures externes 11a, 11b et 11c des trois cannes électriques représentées sur la fig. 3, sont simplement mises à la terre, ce qui évite tout problème de différence de potentiel avec l'environnement (cuves notamment) dans lequel sont employées les cannes chauffantes.

**Revendications**

1. Canne chauffante sans perte à la terre qui comporte, dans une enveloppe métallique (11), un milieu isolant (13, 15) dans lequel sont noyés des éléments électriquement résistants (12) parcourus par un courant électrique, un écran métallique intermédiaire (14) à potentiel constant ou nul entre les éléments résistants et l'enveloppe métallique, caractérisée en ce que les éléments résistants étant alimentés par un réseau électrique triphasé, l'écran métallique intermédiaire est relié au conducteur neutre (N) du réseau triphasé.

2. Canne chauffante selon la revendication 1, caractérisée en ce que l'écran métallique intermédiaire est relié en un point précis du réseau électrique d'alimentation, indépendant de la terre, et où peuvent être collectés les courants de perte.

**Patentansprüche**

1. Heizstab ohne Erdverluste, der in einer metallischen Umhüllung (11) ein Isoliermittel (13, 15) enthält, in das von einem elektrischen Strom durchflossene elektrische Widerstandselemente (12) und eine metallische Abschirmung (14), die sich auf konstantem oder Null-Potential befindet und zwischen den Widerstandselementen und der metallischen Umhüllung angeordnet ist, eingebettet sind, dadurch gekennzeichnet, daß die Widerstandselemente von einem Drehstromnetz versorgt sind und die metallische Zwischenabschirmung mit dem neutralen Leiter (N) des Drehstromnetzes verbunden ist.

2. Heizstab nach Anspruch 1, dadurch gekennzeichnet, daß die metallische Zwischenabschirmung mit einem von Erde unabhängigen genau definierten Punkt verbunden ist, wo die Verlustströme gesammelt werden können.

**Claims**

1. Unearthed heating rod which comprises, inside a metal casing (11), an insulating medium (13, 15) in which are immersed electrically resistive elements (12) through which an electric current passes, an intermediate metal screen (14) with constant or zero potential between the resistive elements and the metal casing, characterized in that, with the resistive elements being supplied by a three-phase electrical network, the intermediate metal screen is connected to the neutral conductor (N) of the three-phase network.

2. Heating rod according to Claim 1, characterized in that the intermediate metal screen is connected to a precise point of the electrical supply network, separate from earth, where the stray currents may be collected.

FIG.1

FIG.2

FIG.3